# EUROPÄISCHE PATENTSCHRIFT

(11) **EP 2 798 190 B1**
(45) Veröffentlichungstag und Bekanntmachung des Hinweises auf die Patenterteilung: **21.10.2015**
(21) Anmeldenummer: 12809282.2
(22) Anmeldetag: 27.12.2012
(51) Int. Cl.: F02M 25/07, F02D 41/00

(54) **VERFAHREN ZUM KONKRETISIEREN EINER FEHLFUNKTION EINER ABGASRÜCKFÜHRUNG EINER BRENNKRAFTMASCHINE EINES KRAFTFAHRZEUGES UND ENTSPRECHENDES DIAGNOSEGERÄT**
METHOD FOR SPECIFYING A MALFUNCTION OF AN EXHAUST GAS RECIRCULATION SYSTEM OF A MOTOR VEHICLE INTERNAL COMBUSTION ENGINE, AND CORRESPONDING DIAGNOSTIC DEVICE
PROCÉDÉ DE CONCRÉTISATION D'UNE DYSFONCTION DU RECYCLAGE DES GAZ D'ÉCHAPPEMENT D'UN VÉHICULE À MOTEUR ET APPAREIL DE DIAGNOSTIC CORRESPONDANT

(30) Priorität: 28.12.2011 DE 102011090059
(43) Veröffentlichungstag der Anmeldung: 05.11.2014
(73) Patentinhaber: Robert Bosch GmbH, 70442 Stuttgart (DE)
(72) Erfinder: ZEIDLER, Johannes, 71522 Backnang (DE); HACKNER, Michael, 73650 Winterbach (DE); LENHARDT, Heiko, 67117 Limburgerhof (DE); WALTER, Andreas, 70825 Korntal-Muenchingen (DE)
(86) Internationale Anmeldenummer: PCT/EP2012/076924
(87) Internationale Veröffentlichungsnummer: WO 2013/098305

(56) Entgegenhaltungen:
- WO-A1-2011/024294
- DE-A1-102009 029 316
- DE-T5-112007 001 467
- DE-T5-112008 002 195
- US-A- 5 540 091
- US-A1- 2008 022 677
- US-B1- 6 257 214
- US-B1- 6 802 302

## Beschreibung

### Stand der Technik

Die Erfindung betrifft ein Verfahren zum Konkretisieren einer Fehlfunktion einer Abgasrückführung einer Brennkraftmaschine eines Kraftfahrzeuges und ein entsprechendes Diagnosegerät.

Zur Einhaltung gesetzlicher Emissionsgrenzwerte sind moderne Dieselkraftfahrzeuge mit einer Hochdruck-Abgasrückführung, kurz HD-AGR, d.h. Abgas wird vor der Abgasturboladerturbine abgezweigt und auf der Frischluftseite nach dem Abgasturboladerverdichter wieder zugeführt, und einer Niederdruck-Abgasrückführung, kurz ND-AGR, d.h. Abgas wird nach dem Partikelfilter abgezweigt und direkt nach dem Luftmassenmesser auf der Frischluftseite wieder eingespeist, ausgestattet. Die Gesetzgebung in Teilmärkten, zum Beispiel in den USA, fordert eine Überwachung der HD- und ND-AGR sowie im Defektfall eine Identifizierung des tatsächlich defekten AGR-Pfades, HD- oder ND-AGR. Die verwendeten Diagnoseverfahren erkennen einen Fehler in der Abgasrückführung, können diesen aber nicht immer eindeutig dem Hochdruck- oder Niederdruckpfad zuordnen, da hierzu Betriebspunkte benötigt werden, in denen ausschließlich der Hochdruck- oder der Niederdruck-Abgasrückführpfad aktiv ist.

Die DE 11 2008 002 195 T5 beschreibt ein Verfahren und eine Vorrichtung zum Überwachen einer Ansaugluftkompressoreinrichtung mit variabler Geometrie. Bei dem dort beschriebenen Verfahren werden ein Abgasdruck und eine Leitschaufelposition der Turboladereinrichtung mit variabler Geometrie überwacht. Der Abgasdruck und die Leitschaufelposition werden geschätzt. Ein Abgasdruckrestwert und ein Leitschaufelpositionsrestwert werden auf der Grundlage von Differenzen zwischen den geschätzten und überwachten Abgasdrücken und Leitschaufelpositionen berechnet. Auf der Grundlage des Abgasdruckrestwerts und des Leitschaufelpositionsrestwerts wird bestimmt, dass der Turbolader korrekt arbeitet.

Die DE 11 2007 001 467 T5 beschreibt ein Verfahren zur gleichzeitigen Abgasrückführung und Steuerung der Verbrennungsphasenlage eines Kraftfahrzeuges, wobei eine Verbrennungsphasenlageninformation von der Zylinderdruckerfassungsvorrichtung bereitgestellt wird und die Kraftstoffzufuhrvorrichtung gemäß Sollwerten und einer Rückkopplung bei der Verbrennungsphasenlageninformation geregelt eingestellt wird. Ferner wird bei dem dort beschriebenen Verfahren die Abgasrückführungsvorrichtung gemäß Sollwerten und einer Rückkopplung bei einem vorgewählten Abgasrückführungssteuerungsparameter geregelt. Die Sollwerte bei dem vorgewählten Abgasrückführungssteuerungsparameter werden auf der Grundlage eines Vergleichs der Einstellungen an der Kraftstoffzufuhrvorrichtung eingestellt.

US6,802,302 B1 offenbart ein System und ein Verfahren zur Diagnose einer Abgasrückführrate.

DE 10 2009 029316 A1 offenbart ein Verfahren zur Erkennung von Drift im Lufteinlasssystem eines Verbrennungsmotors mit Abgasrückführung. Hierzu wird ein berechneter volumetrischer Wirkungsgrad mit gespeicherten Grenzwerten verglichen.

### Offenbarung der Erfindung

Die vorliegende Erfindung schafft ein Verfahren zum Konkretisieren einer Fehlfunktion einer Abgasrückführung einer Brennkraftmaschine eines Kraftfahrzeuges mit den Verfahrensschritten: Einstellen eines ersten Betriebspunktes der Brennkraftmaschine und eines ersten Betriebszustands des Frischluft-/Abgassystems als Fahrzeugkonditionierung in einer ersten Messeinstellung; Messen von volumetrischen Effizienzen der Brennkraftmaschine für die erste Messeinstellung und für mindestens eine weitere Messeinstellung und Vergleichen der gemessenen volumetrischen Effizienzen mit einem in einer Speichereinheit gespeicherten Kennlinienfeld für volumetrische Effizienzwerte der Brennkraftmaschine und Ermitteln, ob bei der Abgasrückführung eine Fehlfunktion vorliegt, anhand des Vergleichsresultats; und Konkretisieren der Fehlfunktion der Abgasrückführung unter Berücksichtigung der Messergebnisse für die erste Messeinstellung und für die mindestens eine weitere Messeinstellung und des gespeicherten Kennlinienfeldes für volumetrische Effizienzwerte.

Ferner kann das Verfahren auch im normalen Betrieb eines Fahrzeuges eingesetzt werden. Der Motor wird dazu in einem Betriebszustand betrieben, der im normalen Fahrbetrieb vorkommt.

Ferner schafft die vorliegende Erfindung ein entsprechendes Diagnosegerät mit den Merkmalen des Patentanspruchs 9.

Die Erfindung ermöglicht in vorteilhafter Weise, den Motor in Betriebszuständen zu betreiben, die im Fahrbetrieb nicht vorkommen. Im Gegensatz zum Normalbetrieb auf der Straße ist der Betrieb bei einem Funktionstest in der Werkstatt nicht abgasrelevant, so können Emissionsverschlechterungen aufgrund der eingestellten Betriebszustände während des Werkstatttests akzeptiert werden. Im Rahmen des Werkstatttests wird der Motor in Betriebszuständen betrieben, in denen das Fehlermerkmal am deutlichsten zu Tage tritt.

Gemäß einer Ausführungsform der Erfindung werden die weiteren eingestellten Betriebspunkte der Brennkraftmaschine und/oder der eingestellten weiteren Betriebszustände des Frischluft-/Abgassystems der mindestens einen weiteren Messeinstellung außerhalb eines Normbetriebsbereichs des Kraftfahrzeuges ausgewählt.

Gemäß einer weiteren Ausführungsform der Erfindung wird der Abgasrückführung ein Soll-Fluss zugeordnet und es erfolgt, falls eine Fehlfunktion ermittelt wird, eine Unterscheidung der Fehlfunktion in eine Fehlfunktion mit einem im Vergleich zu dem Soll-Fluss erhöhten Fluss der Abgasrückführung oder in eine Fehlfunktion mit einem im Vergleich zu dem Soll-Fluss erniedrigten Fluss der Abgasrückführung.

Gemäß einer weiteren Ausführungsform der Erfindung wird die volumetrische Effizienz der Brennkraftmaschine unter anderem auf Basis eines durch einen Luftmassenmesser bestimmten Luftmassenstroms ermittelt.

Gemäß einer weiteren Ausführungsform der Erfindung werden die Betriebszustände der Abgasrückführung durch ein Ansteuern eines Hochdruck-Abgasrückführventils und eines Niederdruck-Abgasrückführventils der Abgasrückführung eingestellt.

Gemäß einer weiteren Ausführungsform der Erfindung wird die Abgasrückführung in eine Hochdruck-Abgasrückführung und in eine Niederdruck-Abgasrückführung unterteilt.

Gemäß einer weiteren Ausführungsform der Erfindung weist beim Testen während eines normalen Fahrbetriebs die mindestens eine weitere Messeinstellung Detektionsschwellen für Fehlfunktionen der Abgasrückführung auf, welche im Vergleich zu den in der ersten Messeinstellung gegebenen Detektionsschwellen für Fehlfunktionen der Abgasrückführung erniedrigt sind.

Gemäß einer weiteren Ausführungsform der Erfindung wird, falls in einem normalen Fahrbetrieb eine Fehlfunktion ermittelt wird, ein Einstellen weiterer Betriebspunkte der Brennkraftmaschine und/oder weiterer Betriebszustände des Frischluft-/ Abgassystems in Abhängigkeit von der ermittelten Fehlfunktion der Abgasrückführung vorgenommen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

Es zeigen:
- Fig. 1: eine schematische Darstellung eines Diagnosegeräts zum Konkretisieren einer Fehlfunktion einer Abgasrückführung einer Brennkraftmaschine gemäß einer Ausführungsform der vorliegenden Erfindung; und
- Fig. 2: ein Flussdiagramm eines Verfahrens zum Konkretisieren einer Fehlfunktion einer Abgasrückführung einer Brennkraftmaschine gemäß einer weiteren Ausführungsform der vorliegenden Erfindung.

In den Figuren der Zeichnung bezeichnen gleiche Bezugszeichen gleiche oder funktionsgleiche Komponenten, soweit nichts Gegenteiliges angegeben ist.

### Ausführungsformen der Erfindung

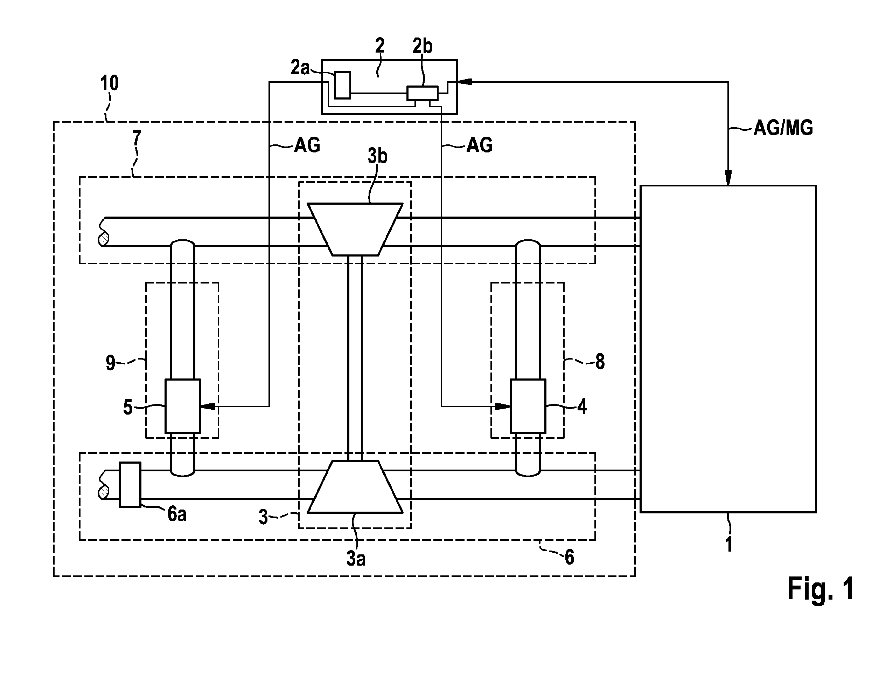

Die Figur 1 zeigt eine schematische Darstellung eines Diagnosegeräts zum Konkretisieren einer Fehlfunktion einer Abgasrückführung einer Brennkraftmaschine gemäß einer Ausführungsform der vorliegenden Erfindung.

Ein Diagnosegerät 2 zum Konkretisieren einer Fehlfunktion eines Frischluft-/ Abgassystems 10 ist an das Frischluft-/Abgassystem 10 einer Brennkraftmaschine 1 eines Kraftfahrzeuges gekoppelt.

Das Diagnosegerät 2 umfasst eine Motorsteuerungseinheit 2b und eine Speichereinheit 2a. Die Motorsteuerungseinheit 2b ist beispielsweise als eine Mikroprozessor-basierte Motorsteuerung ausgebildet und die Speichereinheit 2a ist beispielsweise als ein Halbleiterspeicher mit mikroelektronischen Speicherstrukturen ausgebildet.

Das Diagnosegerät 2 ist beispielsweise als eine On-Board-Diagnose, kurz OBD, oder als ein sonstiges Fahrzeugdiagnosesystem ausgelegt. Während des Fahrbetriebes werden alle abgasbeeinflussenden Systeme des Kraftfahrzeuges überwacht, wie beispielsweise das Frischluft-/Abgassystem 10 der Brennkraftmaschine 1. Zusätzlich werden zugängliche Daten weiterer wichtiger Steuergeräte des Kraftfahrzeuges durch das Diagnosegerät 2 abgefragt.

Dabei kann das Diagnosegerät 2 bei einem Werkstatttest von außen mittels eines Zugangs für die Fahrzeugdiagnose über eine Diagnosebuchse im Fahrzeug ausgelesen werden. Über den gleichen Zugang können Diagnosefunktionen gestartet werden. Die Ergebnisse dieser Funktionen können ebenfalls über die Diagnosebuchse ausgelesen werden.

Die Brennkraftmaschine 1 ist beispielsweise als ein Verbrennungsmotor oder als eine sonstige Wärmekraftmaschine ausgebildet, die chemische Energie eines Kraftstoffs durch Verbrennung in mechanische Arbeit umwandelt. Beispielsweise ist die Brennkraftmaschine 1 als ein Ottomotor oder als ein Dieselmotor ausgeführt.

Ferner umfasst das Frischluft-/Abgassystem 10 einen Abgasturbolader 3 mit einem Abgasturboladerverdichter 3a und mit einer Abgasturboladerturbine 3b, ein Hochdruck-Abgasrückführventil 4 und ein Niederdruck-Abgasrückführventil 5.

Der Abgasturbolader 3 umfasst den Abgasturboladerverdichter 3a und die Abgasturboladerturbine 3b, die sehr ähnlich aufgebaut sein können und auf einer gemeinsamen Welle montiert sind. Der Abgasstrom versetzt die Abgasturboladerturbine 3b in Rotation, diese treibt über die Welle den Abgasturboladerverdichter 3a an, der Luft ansaugt und verdichtet. Die verdichtete Luft wird in die Brennkraftmaschine 1 geleitet.

Das Frischluft-/Abgassystem 10 ist in ein Luftsystem 6 und ein Abgassystem 7 unterteilt.

Das Diagnosegerät 2 verarbeitet beispielsweise gemessene Messgrößen MG und steuert das Frischluft-/Abgassystem 10 durch an Untereinheiten des Frischluft-/Abgassystems 10 versandte Ansteuergrößen AG. Durch die Ansteuergrößen AG werden beispielsweise die Betriebspunkte der Brennkraftmaschine 1 und die Betriebszustände des Frischluft-/ Abgassystems 10 eingestellt. Die Messgrößen MG sind beispielsweise Gasflüsse im Frischluft-/Abgassystem 10 oder die volumetrische Effizienz der Brennkraftmaschine 1.

Das Frischluft-/Abgassystem 10 umfasst ferner eine Hochdruck-Abgasrückführung 8 und eine Niederdruck-Abgasrückführung 9. Die Hochdruck-Abgasrückführung 8 und die Niederdruck-Abgasrückführung 9 bilden dabei zwei verschiedene Abgasrückführpfade, über die Abgase von der Abgasseite, d.h. von dem Abgassystem 7, zur Ansaugseite, d.h. zu dem Luftsystem 6, geleitet werden.

Bei der Durchführung des Verfahrens zum Konkretisieren einer Fehlfunktion der Abgasrückführung 8, 9 der Brennkraftmaschine 1 wird beispielsweise die Summe der durchgeleiteten Abgasflüsse durch die Hochdruck-Abgasrückführung 8 und die Niederdruck-Abgasrückführung 9 ermittelt und mit einem in der Speichereinheit 2a gespeicherten Kennlinienfeld durch das Diagnosegerät 2 verglichen.

Dabei umfasst das Kennlinienfeld beispielsweise Soll-Werte der volumetrischen Effizienz der Brennkraftmaschine und/oder Soll-Werte von Abgasflüssen des Frischluft-/ Abgassystems 10.

Im Fehlerfall, beim Vorliegen einer Fehlfunktion, wird dem Fahrer signalisiert, dass er zur weiteren Fehlereingrenzung und zur Fehlerbehebung eine Werkstatt aufsuchen soll.

Alternativ wird über das Diagnosegerät 2 ein Anfahren bestimmter Motorbetriebszustände vorgenommen, welche eine genauere Identifizierung des defekten Abgasrückführpfades erlauben.

In beiden Fällen wird beispielsweise eine Differenz zwischen den ermittelten Ist-Werte der Abgasflüsse und den Soll-Werten des in der Speichereinheit 2a gespeicherten Kennlinienfeldes gebildet, wodurch es dem Diagnosegerät 2 ermöglicht wird, eine Fehlfunktion zu erkennen.

Abweichungen der gebildeten Differenz, welche größer sind als vorbestimmte Toleranzen, führen dann zu einer weiteren Unterscheidung der Fehlfunktion, beispielsweise in eine sogenannte Low-Flow-Fehlfunktion, d.h. eine Niedrig-Fluss-Fehlfunktion, oder in eine High-Flow-Fehlfunktion, d.h. eine Hoch-Fluss-Fehlfunktion. Die Abgasrückführrate setzt sich dabei jedoch aus der Summe der Hochdruck-Abgasrückführung 8 und der Niederdruck-Abgasrückführung 9 zusammen.

Um eine genauere Identifikation des defekten Abgasrückführungspfades zu erreichen, werden nun Betriebspunkte und/oder Betriebszustände angefahren, in denen lediglich entweder die Hochdruck-Abgasrückführung 8 oder die Niederdruck-Abgasrückführung 9 aktiviert bzw. inaktiviert ist. Diese Aktivierung bzw. Inaktivierung wird durch eine Regelung des Hochdruck-Abgasrückführventils 4 und des Niederdruck-Abgasrückführventils 5 erreicht, d.h. das jeweils andere der regelbaren Abgasrückführventile der Abgasrückführung 10 wird komplett geschlossen oder in eine andere geeignete Anstellung gebracht.

In der Werkstatt können alle Einheiten des Frischluft-/Abgassystems 10 durch das Diagnosegerät 2 individuell angesteuert werden. Dadurch kann das Frischluft-/Abgassystem 10 in den gewünschten Betriebszustand gebracht werden, bei welchem die Art der Fehlfunktion deutlich auftritt, wie beispielsweise durch einen im Vergleich zum Betrieb auf der Straße erhöhten Luftmassendurchsatz aufgrund von geöffneten Drossel- und/oder Drallklappen des Frischluft-/Abgassystems 10, durch einen erhöhten Ladedruck der Brennkraftmaschine 1 oder durch eine erhöhte Motordrehzahl der Brennkraftmaschine 1. Beispielsweise kann zur Konkretisierung der Fehlfunktion auch eine Füllungserfassung der Brennkraftmaschine 1 modelliert werden, beispielsweise durch Erfassung einer volumetrischen Effizienz der Brennkraftmaschine 1 unter anderem auf Basis der durch einen Luftmassenmesser 6a gemessenen Frischluftmasse. Der Luftmassenmesser 6a ist beispielsweise mit dem Diagnosegerät 2 gekoppelt.

Durch definierte und reproduzierbare Betriebspunkte und Betriebszustände lassen sich zudem Detektionsschwellen für Fehlfunktionen genauer festlegen, als dies im normalen Fahrbetrieb des Kraftfahrzeugs möglich wäre.

Durch Kombination der Information der Messeinstellungen mit den unterschiedlichen Betriebspunkten und Betriebszuständen können beispielsweise noch weitergehende Aussagen über weitere Defekte im System getroffen werden.

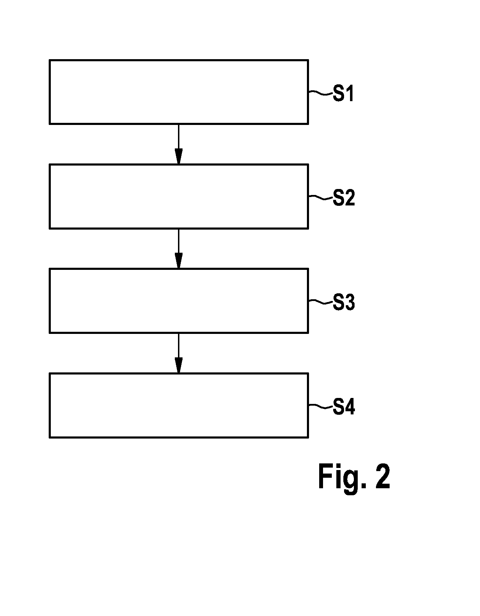

Die Figur 2 zeigt ein Verfahren zum Konkretisieren einer Fehlfunktion einer Abgasrückführung einer Brennkraftmaschine eines Kraftfahrzeuges.

Das Verfahren wird beispielsweise bei einem Werkstatttest über einen Werkstatttester initiiert.

In einem ersten Schritt des Verfahrens erfolgt ein Einstellen S1 eines ersten Betriebspunktes der Brennkraftmaschine 1 und eines ersten Betriebszustands des Frischluft-/ Abgassystems 10 als Fahrzeugkonditionierung in einer ersten Messeinstellung. In diesem ersten Schritt des Verfahrens erfolgt eine Konditionierung des Kraftfahrzeuges und insbesondere des Frischluft-/Abgassystems 10 und der Brennkraftmaschine 1, wobei ein genereller Betriebsbereich durch den ersten Betriebspunkt der Brennkraftmaschine 1 und durch den ersten Betriebszustand des Frischluft-/ Abgassystems 10 definiert wird.

In einem zweiten Schritt des Verfahrens erfolgt ein Messen S2 einer volumetrischen Effizienz der Brennkraftmaschine 1 bei verschiedenen Betriebspunkten der Brennkraftmaschine 1 und/oder bei verschiedenen Betriebszuständen des Frischluft-/ Abgassystems 10 und ein Vergleichen der gemessenen volumetrischen Effizienz mit einem in einer Speichereinheit 2a gespeicherten Kennlinienfeld für volumetrische Effizienzwerte der Brennkraftmaschine 1.

In einem dritten Schritt des Verfahrens erfolgt ein Verknüpfen S3 der im zweiten Schritt ermittelten Merkmale durch den Vergleich der gemessenen volumetrischen Effizienz mit einem in einer Speichereinheit 2a gespeicherten Kennlinienfeld für volumetrische Effizienzwerte der Brennkraftmaschine 1.

In einem vierten Schritt des Verfahrens erfolgt ein Ausgeben S4 des Diagnoseergebnisses beispielsweise auf einem Werkstatttester oder auf einem sonstigen Werkstattdiagnosegerät.

## Patentansprüche

1. Verfahren zum Konkretisieren einer Fehlfunktion einer Abgasrückführung (8, 9) einer Brennkraftmaschine (1) eines Kraftfahrzeuges mit den Verfahrensschritten:
- Einstellen (S1) eines ersten Betriebspunktes der Brennkraftmaschine (1) und eines ersten Betriebszustands des Frischluft-/ Abgassystems (10) als Fahrzeugkonditionierung in einer ersten Messeinstellung;
- Messen (S2) von volumetrischen Effizienzen der Brennkraftmaschine (1) für die erste Messeinstellung und für mindestens eine weitere Messeinstellung und Vergleichen der gemessenen volumetrischen Effizienzen mit einem in einer Speichereinheit (2a) gespeicherten Kennlinienfeld für volumetrische Effizienzwerte der Brennkraftmaschine (1) und Ermitteln, ob bei der Abgasrückführung (8, 9) eine Fehlfunktion vorliegt, anhand des Vergleichsresultats; und
- Konkretisieren (S3) der Fehlfunktion der Abgasrückführung (8, 9) unter Berücksichtigung der Messergebnisse für die erste Messeinstellung und für die mindestens eine weitere Messeinstellung und des gespeicherten Kennlinienfeldes für volumetrische Effizienzwerte.

2. Verfahren nach Anspruch 1, **dadurch gekennzeichnet, dass** die weiteren eingestellten Betriebspunkte der Brennkraftmaschine (1) und/oder der eingestellten weiteren Betriebszustände des Frischluft-/ Abgassystems (10) der mindestens einen weiteren Messeinstellung außerhalb eines Normbetriebsbereichs des Kraftfahrzeuges ausgewählt werden.

3. Verfahren nach einem der Ansprüche 1 und 2, **dadurch gekennzeichnet, dass** der Abgasrückführung (8, 9) ein Soll-Fluss zugeordnet wird und, falls eine Fehlfunktion ermittelt wird, eine Unterscheidung der Fehlfunktion in eine Fehlfunktion mit einem im Vergleich zu dem Soll-Fluss erhöhten Fluss der Abgasrückführung (8, 9) oder in eine Fehlfunktion mit einem im Vergleich zu dem Soll-Fluss erniedrigten Fluss der Abgasrückführung (8, 9) erfolgt.

4. Verfahren nach Anspruch 3, **dadurch gekennzeichnet, dass** die Ermittlung der volumetrischen Effizienz der Brennkraftmaschine (1) unter anderem auf Basis eines durch einen Luftmassenmesser (6a) bestimmten Luftmassenstroms vorgenommen wird.

5. Verfahren nach einem der Ansprüche 1 bis 4, **dadurch gekennzeichnet, dass** die Betriebszustände der Abgasrückführung (8, 9) durch ein Ansteuern eines Hochdruck-Abgasrückführventils (4) und eines Niederdruck-Abgasrückführventils (5) der Abgasrückführung (8, 9) eingestellt werden.

6. Verfahren nach einem der Ansprüche 1 bis 5, **dadurch gekennzeichnet, dass** die Abgasrückführung (8, 9) in eine Hochdruck-Abgasrückführung (8) und in eine Niederdruck-Abgasrückführung (9) unterteilt wird.

7. Verfahren nach einem der Ansprüche 1 bis 6, **dadurch gekennzeichnet, dass** beim Testen während eines normalen Fahrbetriebs die mindestens eine weitere Messeinstellung Detektionsschwellen für Fehlfunktionen der Abgasrückführung (8, 9) aufweist, welche im Vergleich zu den in der ersten Messeinstellung gegebenen Detektionsschwellen für Fehlfunktionen der Abgasrückführung (8, 9) erniedrigt sind.

8. Verfahren nach einem der Ansprüche 1 bis 6, **dadurch gekennzeichnet, dass**, falls in einem normalen Fahrbetrieb eine Fehlfunktion ermittelt wird, ein Einstellen weiterer Betriebspunkte der Brennkraftmaschine (1) und/oder weiterer Betriebszustände des Frischluft-/ Abgassystems (10) in Abhängigkeit von der ermittelten Fehlfunktion der Abgasrückführung (8, 9) vorgenommen wird.

9. Diagnosegerät zum Prüfen einer Abgasrückführung zur Durchführung des Verfahrens nach einem der Ansprüche 1 bis 8.

## Claims

1. Method for specifying a malfunction of an exhaust gas recirculation system (8, 9) of an internal combustion engine (1) of a motor vehicle, having the method steps:
- setting (S1) a first operating point of the internal combustion engine (1) and a first operating state of the fresh air/exhaust gas system (10) as vehicle conditioning in a first measuring setting;
- measuring (S2) volumetric efficiencies of the internal combustion engine (1) for the first measuring setting and for at least one further measuring setting and comparing the measured volumetric efficiencies with a characteristic curve diagram, stored in a memory unit (2a), for volumetric efficiency values of the internal combustion engine (1), and determining whether the exhaust gas recirculation system (8, 9) has a malfunction, by reference to the comparison results; and
- specifying (S3) the malfunction of the exhaust gas recirculation system (8, 9) by taking into account the measurement results for the first measuring setting and for the at least one further measuring setting and the stored characteristic curve diagram for the volumetric efficiency values.

2. Method according to Claim 1, **characterized in that** the further set operating points of the internal combustion engine (1) and/or the set further operating states of the fresh air/exhaust gas system (10) of the at least one further measuring setting are selected outside a normal operating range of the internal combustion engine.

3. Method according to one of Claims 1 and 2, **characterized in that** the exhaust gas recirculation system (8, 9) is assigned a set point flow rate and, if a malfunction is determined, the malfunction is differentiated into a malfunction with a flow rate of the exhaust gas recirculation system (8, 9) which is increased compared to the set point flow rate or into a malfunction with a flow rate of the exhaust gas recirculation system (8, 9) which is decreased compared to the set point flow rate.

4. Method according to Claim 3, **characterized in that** the volumetric efficiency of the internal combustion engine (1) is determined, inter alia, on the basis of an air mass flow rate which is determined by means of an air mass flow meter (6a).

5. Method according to one of Claims 1 to 4, **characterized in that** the operating states of the exhaust gas recirculation system (8, 9) are set by actuating a high-pressure exhaust gas recirculation valve (4) and a low-pressure exhaust gas recirculation value (5) of the exhaust gas recirculation system (8, 9).

6. Method according to one of Claims 1 to 5, **characterized in that** the exhaust gas recirculation system (8, 9) is divided into a high-pressure exhaust gas recirculation system (8) and into a low-pressure exhaust gas recirculation system (9).

7. Method according to one of Claims 1 to 6, **characterized in that** during the testing during a normal operating mode the at least one further measuring setting has detection thresholds for malfunctions of the exhaust gas recirculation system (8, 9), which detection thresholds are lowered compared to the detection thresholds which are provided for malfunctions of the exhaust gas recirculation system (8, 9) in the first measuring setting.

8. Method according to one of Claims 1 to 6, **characterized in that** if a malfunction is detected in a normal driving mode, further operating points of the internal combustion engine (1) and/or further operating states of the fresh air/exhaust gas system (10) are set as a function of the detected malfunction of the exhaust gas recirculation system (8, 9).

9. Diagnostic unit for checking an exhaust gas recirculation system for carrying out the method according to one of Claims 1 to 8.

## Revendications

1. Procédé de concrétisation d'un défaut de fonctionnement d'un système de recyclage des gaz d'échappement (8, 9) d'un moteur à combustion interne (1) d'un véhicule automobile, comprenant les étapes de procédé suivantes :
- réglage (S1) d'un premier point de fonctionnement du moteur à combustion interne (1) et d'un premier état opérationnel du système à air frais/gaz d'échappement (10) en tant que conditionnement du véhicule dans un premier réglage de mesure ;
- mesure (S2) des efficacités volumétriques du moteur à combustion interne (1) pour le premier réglage de mesure et pour au moins un réglage de mesure supplémentaire, et comparaison des efficacités volumétriques mesurées avec un diagramme caractéristique des valeurs de l'efficacité volumétrique du moteur à combustion interne (1) enregistré dans une unité à mémoire (2a), et détermination, à l'aide du résultat de la comparaison, de s'il existe un défaut de fonctionnement au niveau du système de recyclage des gaz d'échappement (8, 9) ; et
- concrétisation (S3) du défaut de fonctionnement du système de recyclage des gaz d'échappement (8, 9) en tenant compte des résultats des mesures pour le premier réglage de mesure et pour l'au moins un réglage de mesure supplémentaire et du diagramme caractéristique enregistré des valeurs de l'efficacité volumétrique.

2. Procédé selon la revendication 1, **caractérisé en ce que** les points de fonctionnement supplémentaires réglés du moteur à combustion interne (1) et/ou les états opérationnels supplémentaires réglés du système à air frais/gaz d'échappement (10) de l'au moins un réglage de mesure supplémentaire sont choisis en dehors d'une plage de fonctionnement normalisée du véhicule automobile.

3. Procédé selon l'une des revendications 1 et 2, **caractérisé en ce qu'**un flux de consigne est associé au système de recyclage des gaz d'échappement (8, 9) et, dans le cas où un défaut de fonctionnement est déterminé, une différenciation du défaut de fonctionnement est effectuée entre un défaut de fonctionnement avec un flux accru du système de recyclage des gaz d'échappement (8, 9) par rapport au flux de consigne et un défaut de fonctionnement avec un flux réduit du système de recyclage des gaz d'échappement (8, 9) par rapport au flux de consigne.

4. Procédé selon la revendication 3, **caractérisé en ce que** la détermination de l'efficacité volumétrique du moteur à combustion interne (1) est réalisée, entre autres, en se basant sur un débit massique d'air déterminé par un dispositif de mesure de la masse d'air (6a).

5. Procédé selon l'une des revendications 1 à 4, **caractérisé en ce que** les états opérationnels du système de recyclage des gaz d'échappement (8, 9) sont réglés par une commande d'une vanne de recyclage des gaz d'échappement à haute pression (4) et d'une vanne de recyclage des gaz d'échappement à basse pression (5) du système de recyclage des gaz d'échappement (8, 9).

6. Procédé selon l'une des revendications 1 à 5, **caractérisé en ce que** le système de recyclage des gaz d'échappement (8, 9) est divisé en un système de recyclage des gaz d'échappement à haute pression (8) et un système de recyclage des gaz d'échappement à basse pression (9).

7. Procédé selon l'une des revendications 1 à 6, **caractérisé en ce que** lors des essais pendant un mode de déplacement normal, l'au moins un réglage de mesure supplémentaire possède des seuils de détection des défauts de fonctionnement du système de recyclage des gaz d'échappement (8, 9) qui sont abaissés par rapport aux seuils de détection des défauts de fonctionnement du système de recyclage des gaz d'échappement (8, 9) définis dans le premier réglage de mesure.

8. Procédé selon l'une des revendications 1 à 6, **caractérisé en ce que** dans le cas où un défaut de fonctionnement est déterminé dans un mode de déplacement normal, un réglage de points de fonctionnement supplémentaires du moteur à combustion interne (1) et/ou d'états opérationnels supplémentaires du système à air frais/gaz d'échappement (10) est effectué en fonction du défaut de fonctionnement déterminé du système de recyclage des gaz d'échappement (8, 9).

9. Appareil de diagnostic destiné à contrôler un système de recyclage des gaz d'échappement en vue de mettre en oeuvre le procédé selon l'une des revendications 1 à 8.
